# EUROPEAN PATENT APPLICATION

(11) **EP 2 747 360 A1**
(43) Date of publication of application: **25.06.2014**
(21) Application number: 12198473.6
(22) Date of filing: 20.12.2012
(51) Int. Cl.: H04L 29/06, H04L 29/12, H04L 12/28, H04L 29/08

(54) **Provisioning a user device in a network subsystem**

(71) Applicant: Koninklijke KPN N.V., 2516 CK The Hague (NL)
(72) Inventor: Veenstra, Pieter, 2518 HR The Hague (NL); Span, Pieter, 3826CN Amersfoort (NL)
(74) Representative: Wuyts, Koenraad Maria

(57) **Abstract**

Provisioning system (120) for provisioning a user device (020) in a network subsystem (100) of a network, the provisioning system comprising:
- a network interface (122) for receiving a notification via the network, the notification comprising an identification of the user device (020) and an identification of an authenticated user device (040), the authenticated user device being authenticated to the network subsystem; and
- a processing subsystem (124) for:
i) based on the identification of the authenticated user device, locating a user profile (150), which includes an entry for the authenticated user device, on a user profile server (140) of the network subsystem; and
ii) provisioning the user device (020) in the network subsystem by creating an entry for the user device in the user profile (150).

## Description

### FIELD OF THE INVENTION

The invention relates to a provisioning system for provisioning a user device in a network subsystem. The invention further relates to a method of using equipment of a network subsystem for provisioning the user device in the network subsystem, and to control software comprising instructions operative for executing the steps of the method on equipment of the network subsystem. The invention further relates to a network subsystem, such as an Internet protocol Multimedia Subsystem, comprising the provisioning system.

### BACKGROUND OF THE INVENTION

Telecommunication networks, such as cellular networks or fixed-line networks, have seen extensive change over the last decade. A significant part of the change has been in response to the growing popularity of Internet Protocol (IP) based services. In order to enable such services in existing telecommunication networks, network subsystems have been introduced which enable merging existing services of the telecommunication network with IP based services. A well known example of such a network subsystem is the so-termed Internet protocol Multimedia Subsystem (IMS), which enables a network operator to, amongst others, provide IP based multimedia services to its subscribers.

In order to utilize the services provided by the network subsystem, a user device, such as a Smartphone, a tablet device, etc., typically needs to be provisioned in the network subsystem. Here, the term *provisioning* refers to establishing data in the network subsystem which allows the network subsystem to associate the user device with a user of the network subsystem, i.e., with a subscriber. For example, in IMS, a user device may be provisioned by creating an entry for the user device in a user profile of the user stored in a Home Subscriber Server (HSS) of the network subsystem. Here, the HSS or its functionality is also referred to by the term User Profile Server Function (UPSF).

It is known to provision a user device by means of Customer Relation Management (CRM) processes. For example, if a user purchases a user device from a store of the network operator, the staff at the store may initiate provisioning of the purchased user device in the network subsystem of the network operator by putting in an order in an internal CRM system of the network operator. Similarly, the user may call a helpdesk of the network operator to request provisioning of a new user device.

The user may be required to identify him/herself during such CRM processes, e.g., by showing an identity card or providing identity details over the phone. As such, it may be ensured that the user is authorized to request the provisioning of the user device.

### SUMMARY OF THE INVENTION

Disadvantageously, such CRM-based provisioning of a user device involves substantial effort from the user and/or from the network operator.

It would be advantageous to enable provisioning a user device in a network subsystem in a more automatic manner, i.e., with less human intervention.

A first aspect of the invention provides a provisioning system for provisioning a user device in a network subsystem of a network, the provisioning system comprising:
- a network interface for receiving a notification via the network, the notification comprising an identification of the user device and an identification of an authenticated user device, the authenticated user device being authenticated to the network subsystem; and
- a processing subsystem for:
   i) based on the identification of the authenticated user device, locating a user profile, which includes an entry for the authenticated user device, on a user profile server of the network subsystem; and
   ii) provisioning the user device in the network subsystem by creating an entry for the user device in the user profile.

A further aspect of the invention provides a method of using network equipment for provisioning a user device in a network subsystem of a network, the method comprising:
- receiving a notification via the network, the notification comprising an identification of the user device and an identification of an authenticated user device, the authenticated user device being authenticated to the network subsystem;
- based on the identification of the authenticated user device, locating a user profile, which includes an entry for the authenticated user device, on a user profile server of the network subsystem; and
- provisioning the user device in the network subsystem by creating an entry for the user device in the user profile.

A further aspect of the invention provides control software for provisioning a user device in a network subsystem of a network, the control software comprising instructions for execution on network equipment, the instructions being operative for:
- receiving a notification via the network, the notification comprising an identification of the user device and an identification of an authenticated user device, the authenticated user device being authenticated to the network subsystem;
- based on the identification of an authenticated user device, locating a user profile, which includes an entry for the authenticated user device, on a user profile server of the network subsystem; and
- provisioning the user device in the network subsystem by creating an entry for the user device in the user profile.

The above measures are carried out by network equipment, such as a provisioning system comprised in or connected to the network subsystem. The network subsystem is part of a network of a network operator, which may or may not include an access network. The user device is connected to the network subsystem via the network, e.g., via the access network and/or other parts of the network. However, the user device has not been provisioned yet in the network subsystem. As a consequence, the user device is unable to utilize many, if not most, of the services provided by the network subsystem.

The provisioning of the user device by the provisioning system is performed as follows. The provisioning system receives a notification via one or more elements of the network. The notification identifies the user device, e.g., in the form of an address, device identifier, etc. In effect, the notification serves to notify the provisioning system about the user device. Moreover, the notification identifies an authenticated user device. The authenticated user device is authenticated to the network subsystem, e.g., in manner known per se from the field of network security. The provisioning system searches for a user profile on a user profile server of the network subsystem, i.e., on a server which stores user profiles of users. In particular, the provisioning system searches for a user profile which includes an entry for the authenticated user device. Here, the term *entry* refers to information being included in the user profile which identifies the authenticated user device to the network subsystem. The user device is then provisioned in the network subsystem by creating an entry for the user device in the user profile. As such, information is included in the user profile which identifies the user device to the network subsystem.

The above measures have the effect that the user device is provisioned in the network subsystem by the provisioning system. For that purpose, the provisioning system receives a notification which identifies, in addition to the user device itself, an authenticated user device. The authenticated user device is authenticated to the network subsystem and thus typically has an entry in a user profile of the user of the network subsystem. The provisioning system is thus enabled to locate the user profile of the user, e.g., by searching for the entry of the authenticated user device. Moreover, the provisioning system is enabled to create the entry for the user device since the notification provides an identification of the user device. An advantage of the present invention is that the user does not need to manually request the provisioning of the user device. Rather, the provisioning system may automatically provision the user device in the network subsystem in response to the notification. Another advantage of the present invention is that the user device may utilize services provided by the network subsystem with otherwise would not be available to the user device.

In an embodiment, the authenticated user device is a home gateway of a home network of the user, and the user device is located in the home network. The provisioning system thus provisions user devices located in a home network of the user.

In a further embodiment, the notification constitutes a notification of a discovery of the user device by the home gateway, and the processing subsystem is arranged for initiating the provisioning of the user device in response to said discovery by the home gateway. Hence, the provisioning system commences the provisioning of the user device when it is notified of a discovery of the user device within the home network.

In a further embodiment, the home gateway is connected to an auto-configuration server, and the network interface is arranged for receiving the notification via the auto-configuration server. Hence, the auto-configuration server cooperates with the home gateway so as to enable the provisioning system to obtain the notification. For example, the auto-configuration server may forward the notification. The auto-configuration server is typically considered to be a trusted element of the network.

In a further embodiment, the provisioning is subject to the notification being received via one or more trusted elements of the network. The term trusted element refers to a functional part of the network which is trusted by the network operator, typically by the trusted element being at least partially under control of the network operator. As the notification is received via one or more trusted elements of the network, the provisioning is relatively secure. A reason for this is that trusted elements themselves are unlikely to tamper with notifications or themselves send malicious notifications. Even when being connected to non-trusted elements, such trusted elements typically filter communication with the non-trusted elements, thereby preventing or making it more difficult to send malicious notifications to the provisioning system. The provisioning is thus performed if the notification is received via one or more trusted elements. For example, if the user device is located in a home network of the user, the provisioning may be subject to the notification being received via a chain of trusted elements which connect the home network to the provisioning system. The provisioning is thus more secure in that it is prevented or made more difficult to send malicious notifications to the provisioning system.

In a further embodiment, the processing subsystem is arranged for i) identifying a further authenticated user device in the user profile, and ii) querying the user via the further authenticated user device to authorize said provisioning of the user device. The provisioning system thus obtains authorization from the user by querying the user via the further authenticated user device. An advantage of obtaining authorization for the provisioning of the user device from the user is that security can be provided even if the notification is not only, or not at all, sent via trusted elements of the network. The further authenticated user device effectively functions as a credential for the user in that the provisioning system does not have to establish the authenticity of the user itself but instead uses an authenticated user device of which the authenticity has been established and which, to a high degree of probability, is being used by said user. The authorization for provisioning the user device is thus obtained in a secure manner, while the user is still involved minimally, i.e., having only to provide the authorization, not having to request the provisioning, etc.

In a further embodiment, querying the user comprises sending an authorization token to the further authenticated user device for enabling the user to authorize said provisioning of the user device by providing a response to the provisioning system based on the authorization token. The user is thus provided with an authorization token, and provides the authorization by returning a response to the provisioning system which is based on the authorization token, e.g., by being derived from or directly constituted by the authorization token. An advantage of this form of querying the user is that the authorization token may be delivered to the user using various services provided by the network subsystem, e.g., a text message or other forms of notification. In addition, the user may return the response in separation of the further authenticated user device, e.g., using a different device. Nevertheless, the authorization for provisioning the user device is obtained in a secure manner as it still involves the further authenticated user device.

In a further embodiment, the further authenticated user device is a mobile phone. The user typically has a mobile phone readily available, and hence is able to easily respond to a query provided on the mobile phone. The querying may be in the form of, e.g., a SMS, an Instant Messaging (IM) message, an e-mail, etc

In a further embodiment, the processing subsystem is arranged for establishing a logical connection in the user profile between the entry of the user device and an entry of a selected authenticated user device included in the user profile. By establishing a logical connection between the entries of the user device and a selected authenticated user device, the user device is bound to the selected authenticated user device. This provides the advantage that the user device is associated with the selected authenticated user device. A further advantage is that recorded information of the selected authenticated user device in the user profile, such as service preferences, service capabilities, network addresses, etc, may supplement or act as substitute for such information of the user device.

In a further embodiment, the logical connection is established to a private user identity of the selected authenticated user device. A private user identity is typically associated with a public user identity so as to allow communication with the selected authenticated user device, e.g., by the public user identity providing an address such as a fixed-line telephone number, a mobile telephone number, an e-mail address, an IP address, etc. By having a logical connection with the private user identity of the selected authenticated user device, the user device is associated with at least part of said public user identity. A further advantage is that user device may be addressable using said public user identity.

In a further embodiment, the selected authenticated user device is the authenticated user device. The logical connection is thus established in the user profile between the user device and the authenticated user device identified by the notification.

In a further embodiment, the user profile includes a plurality of entries for a respective plurality of authenticated user devices, and the processing subsystem is arranged for selecting the selected authenticated user device amongst the plurality of authenticated user devices based on a correspondence with the user device in device type and/or device location. The processing subsystem thus determines a similarity between the user device and the selected authenticated user device in terms of device type and/or device location. Here, the device type may distinguish between, e.g., mobile and non-mobile user device. The device location may be a network location and/or a physical location. An advantage of this embodiment is that an authenticated user device may be selected which is most similar to the user device in terms of device type and/or device location.

In a further embodiment, the user profile includes a plurality of entries for a respective plurality of authenticated user devices, and the provisioning system is arranged for receiving a selection from the user identifying one of the plurality of authenticated user devices, thereby establishing the selected authenticated user device. The user can thus select which one of a plurality of authenticated user devices is to be associated with the user device. As such, the user can select an authenticated user device which is similar to the user device in terms of device type, device location, etc.

In a further embodiment, the selection data is received from a web page which enables the user to select amongst the plurality of authenticated user devices. A web page is a convenient form for enabling the user to establish the selected authenticated user device.

In a further embodiment, a network subsystem is provided comprising the above provisioning system.

In a further embodiment, the network subsystem is an Internet Protocol Multimedia Subsystem.

It will be appreciated by those skilled in the art that two or more of the above-mentioned embodiments, implementations, and/or aspects of the invention may be combined in any way deemed useful.

Modifications and variations of the method and/or the control software, which correspond to the described modifications and variations of the provisioning system, can be carried out by a person skilled in the art on the basis of the present description. The invention may also be implemented by network equipment other than a provisioning system.

The invention is defined in the independent claims. Advantageous yet optional embodiments are defined in the dependent claims.

### BRIEF DESCRIPTION OF THE DRAWINGS

These and other aspects of the invention are apparent from and will be elucidated with reference to the embodiments described hereinafter. In the drawings,
Fig. 1 shows a network subsystem comprising a provisioning system for provisioning a user device in the network subsystem;
Fig. 2 shows a method of using network equipment, such as the provisioning system, to provision the user device in the network subsystem;
Fig. 3 shows a computer readable medium comprising control software for executing the steps of the method on network equipment such as the provisioning system;
Fig. 4a shows an example of the provisioning of the user device when the user device and the authenticated user device are located in a home network;
Fig. 4b shows a message exchange for the provisioning; and
Fig. 5 illustrates creating an entry for the user device in a user profile.

It should be noted that items which have the same reference numbers in different Figures, have the same structural features and the same functions, or are the same signals. Where the function and/or structure of such an item has been explained, there is no necessity for repeated explanation thereof in the detailed description

### DETAILED DESCRIPTION OF EMBODIMENTS

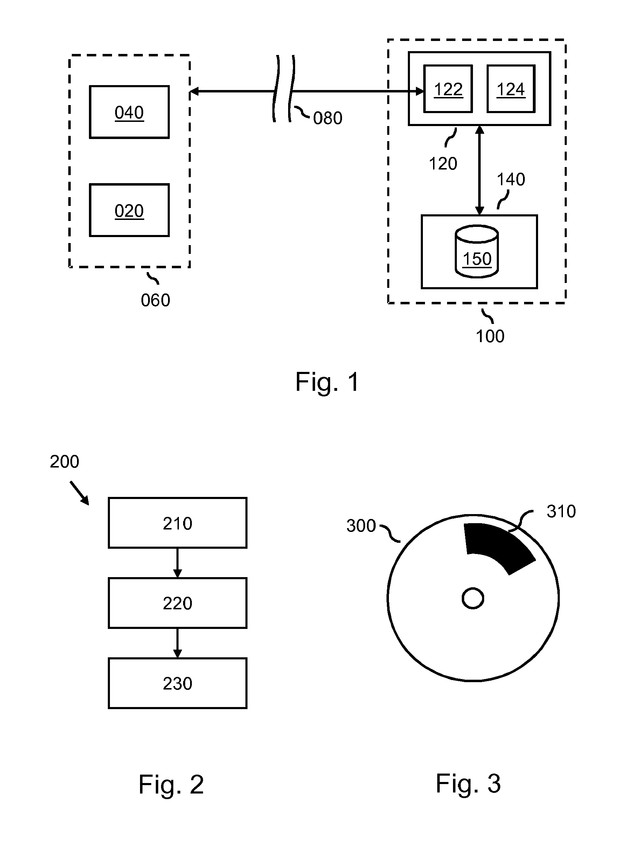

Fig. 1 shows a provisioning system 120 for provisioning a user device in a network subsystem 100. Although not explicitly shown in Fig. 1, the network subsystem 100 is part of a network of the network operator, e.g., a wired or wireless network. In the example of Fig. 1, the provisioning system 120 is shown to be comprised in the network subsystem 100. Alternatively, the provisioning system 120 may be located outside of the network subsystem 100, e.g., in a different part of the network, while being connected to the network subsystem 100. The provisioning system 120 comprises a network interface 122 and a processing subsystem 124, with their function being explained further onwards. The network subsystem 100 is indicated in Fig. 1 as a dashed rectangle and further comprises a user profile server 140. It will be appreciated that a network subsystem 100 typically comprises many more functional elements. However, these have been omitted in Fig. 1 for clarity reasons. Moreover, it will be appreciated the functionality of the provisioning system 120 may be embodied by various network equipment of the network, such as an application server or an application server function being executed on other network equipment. Hence, an embodiment of the provisioning system 120 may be an application server.

Fig. 1 further shows a user device 020 being connected to the network subsystem 100. Typically, such a connection between a user device 020 and the network subsystem 100 takes place via an access network 080. An example of an access network is a wired access network such as a Digital Subscriber Line (DSL) or Fiber-optic access network. Another example is a wireless access network such as an UMTS/LTE access network. The access network 080 may be under control of the network operator and thus form part of the network. The user device 020 is not provisioned in the network subsystem 100. In particular, the user device 020 is not provisioned in the network subsystem 100 by lacking an entry in a user profile 150 of the user profile server 140 of the network subsystem 100.

The operation of the provisioning system 120 may be briefly explained as follows. The network interface 122 receives a notification via the network. The notification comprises an identification of the user device 020 and an identification of an authenticated user device 040. The processing subsystem 124 uses the identification of the authenticated user device 040 to locate a user profile 150 of a user on a user profile server 140 of the network subsystem 100. The user profile 150 includes an entry for the authenticated user device 040. The processing subsystem 124 then provisions the user device 020 in the network subsystem 100 by creating an entry for the user device 020 in the user profile 150. For that purpose, the identification of the user device may be used.

In the example of Fig. 1, the user device 020 is located in a home network 060 of the user. Another term for home network is residential network. Fig. 1 shows the authenticated user device 040 also being located in the home network 060 and thus also being connected to the network subsystem 100 via the access network 080. The authenticated user device 040 is authenticated to the network subsystem 100, e.g., in a manner as known from the field of network security. Necessarily, the authenticated user device 040 is also provisioned in the network subsystem 100 by being included in the user profile 150.

Fig. 2 shows a method 200 of using network equipment such as the provisioning system to provision a user device in a network subsystem. As such, the method 200 may correspond to an operation of the provisioning system. It will be appreciated, however, that the method 200 may also be performed in separation of the provisioning system, e.g., using other network equipment of the network subsystem.

The method 200 comprises, in a step titled "RECEIVING NOTIFICATION INDENTIFYING USER DEVICE", receiving 210 a notification via the network, the notification comprising an identification of the user device and an identification of an authenticated user device, the authenticated user device being authenticated to the network subsystem. The method 200 further comprises, in a step titled "LOCATING USER PROFILE OF USER", locating 220, based on the identification of the authenticated user device, a user profile which includes an entry for the authenticated user device on a user profile server of the network subsystem. The method 200 further comprises, in a step titled "PROVISIONING USER DEVICE", provisioning 230 the user device in the network subsystem by creating an entry for the user device in the user profile.

Fig. 3 illustratively shows control software 310 comprising instructions for executing the steps of the method 200 on network equipment such as the provisioning system. The control software 310 may be comprised on a computer readable medium 300, for example in the form of as a series of machine readable physical marks and/or as a series of elements having different electrical, e.g., magnetic, or optical properties or values.

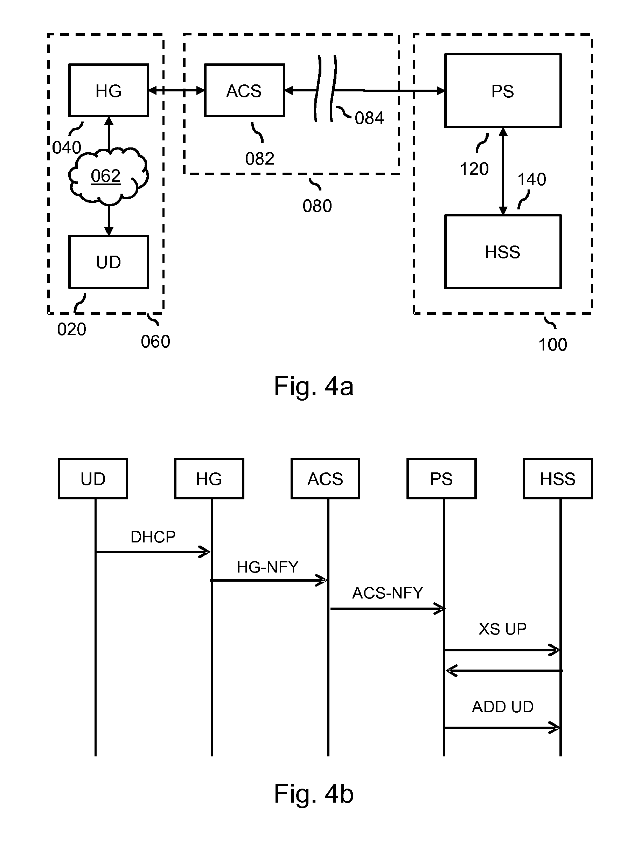

The present invention will be further explained in reference to Figs. 4a-5. Here, the network subsystem 100 is an IMS, and the user profile server in an HSS. It will be appreciated, however, that the following aspects of the invention are also applicable in general to network subsystems and user profile servers comprised therein.

Fig. 4a shows an example of the provisioning of the user device 020 when the user device 020 and the authenticated user device 040 are located in a home network 060. Here, the user device 020 and the provisioning system 120 are also indicated by their abbreviations, i.e., UD and PS, respectively. In Fig. 4a, the authenticated user device 040 is shown to be a home gateway (HG) of the home network 060. Another term for home gateway is residential gateway or residential network access device. The home gateway 040 is connected to the IMS 100 via the access network 080. The home gateway 040 is an authenticated user device in that it is provisioned in and authenticated to the IMS 100. The provisioning and authentication may have taken place via CRM processes. Alternatively, the home gateway 040 may be provisioned and authenticated using a method of service preparation as described in European Patent EP 1912411.

Fig. 4a further shows the home gateway 040 being connected to an auto-configuration server (ACS) 082. Auto-configuration servers are known per se from the field of ISPs. The auto-configuration server 082 may be provided by, e.g., an Internet Service Provider (ISP) which provides the access network 080. The auto-configuration server 082 is connected to the IMS 100 via a remaining portion 084 of the access network 080.

In the example of Fig. 4a, the home gateway 040 also functions as Wi-Fi access point, thereby providing the user device 020 with access to the network subsystem 100 via Wi-Fi communication 062. Additionally or alternatively, said access may be wired.

Fig. 4b illustrates a message exchange between the user device, the home gateway, the auto-configuration server, the provisioning system and the user profile server, i.e., the HSS, with the message exchange resulting in the provisioning of the user device. Each of said devices or servers is indicated in Fig. 4b by means of their abbreviation.

The message exchange may be as follows. The user device UD, when first being used by the user at home, may detect the home gateway HG and request to join the home network, e.g., by requesting provisioning of a network address by the home gateway HG. For example, the user device UD may request to join the home network by sending a so-termed Dynamic Host Configuration Protocol (DHCP) request to the home gateway HG in the form of a message titled "DHCP". The home gateway HG may thus discover the user device UD by means of receiving the DHCP request from the user device UD. Alternatively or additionally, the home gateway HG may use other means of discovering the user device UD in the home network, e.g., using a Universal Plug And Play (UPNP) protocol.

The home gateway HG may be under remote management of the auto-configuration server ACS. The remote management may cause the home gateway HG to notify the auto-configuration server ACS of the discovery of the user device UD by means of a message titled "HG NFY". It is noted that such remote management of a home gateway by an auto-configuration server is known per se. For example, a paper titled *"*Remote discovery and management of end-user devices in heterogeneous private networks" by A. Delphinato et al., Consumer Communications and Networking Conference, 10-13 Jan. 2009, IEEE, pp. 1-5, describes concepts for discovery of user devices by the home gateway HG as well as the proxying of management and control actions to remote servers of an ISP by means of the auto-configuration server ACS. Accordingly, the auto-configuration server ACS may notify the provisioning system PS by means of a message titled "ACS NFY". The message may identify the user device UD by including a unique identifier of the user device UD, such as a Media Access Control (MAC) address or similar identifier of the user device UD. The message may also identify the home gateway HG, e.g., in a similar manner.

The provisioning system PS, and in particular its processing subsystem, may initiate the provisioning of the user device UD in response to said notification. For that purpose, a message exchange titled "XS UP" may take place between the provisioning system PS and the HSS to access the user profile of the user. The provisioning system PS may then provision the user device UD in the IMS by creating an entry for the user device UD in the user profile, e.g., by means of sending message titled "ADD UD" to the HSS.

It is noted that the access network may constitute a trusted network in that it may be under control of the network operator. In particular, the auto-configuration server ACS may be considered a trusted element of said trusted network. The notification may be thus deemed to be authorized since the notification is received via the auto-configuration server, and in particular, since the notification is received via a chain of trusted elements connecting the home network to the provisioning system, i.e., the trusted network.

It is further noted that in the above, the notification to the provisioning system PS is provided by the home gateway HG in that the home gateway HG notifies the auto-configuration server ACS which then notifies the provisioning system PS. Hence, the notification may be effectively be constituted by two separate notification messages, i.e., a first message from the home gateway HG to the auto-configuration server ACS and a second message from the auto-configuration server ACS to the provisioning system PS. It is noted that the two notification messages may be separated in time, in that the auto-configuration server ACS may not immediately notify the provisioning system PS. Moreover, the initiative for each notification may lie at either of two involved parties. As such, the home gateway HG may notify the auto-configuration server ACS once a new user device has been discovered in the home network, e.g., as part of a maintenance message. Alternatively or additionally, the auto-configuration server ACS may query the home gateway HG whether a new user device has been discovered in the home network. Similarly, the auto-configuration server ACS may notify the provisioning system PS after receiving a new notification from the home gateway HG. Alternatively or additionally, the provisioning system may query the auto-configuration server ACS whether a new notification from the home gateway HG has been received.

It will be appreciated that various modifications are conceivable of the general concept of notifying the provisioning system of the discovery of the user device UD. For example, the home gateway HG may also directly send a message to the provisioning system PS to notify the provisioning system PS of a discovery of the user device UD. Here, other parts of the access network or the network in general may constitute the trusted element.

It is noted that the processing subsystem may be arranged for actively determining whether the notification was received via one or more trusted elements of the network. For example, the processing subsystem may analyze a header of the notification. Alternatively, the notification being received via one or more trusted elements may be a consequence of a configuration of the network, i.e., they may not be other ways of receiving the notification. For example, the provisioning system may be connected to the home network via a chain of trusted elements which comprises the auto-configuration server.

Another example of the provisioning of the user device is the following. The authenticated user device may be a portable wireless hotspot which is provisioned in and authenticated to the IMS. The provisioning and authentication may have taken place via CRM processes. The portable wireless hotspot may be connected to the IMS via an UMTS/LTE access network, and may function as a local wireless access point for other devices, e.g., for accessing the Internet via the UMTS/LTE access network. Such portable wireless hotspots are also known commercially under the term "MiFi". Similarly to the example shown in Fig. 4a, the user device may be connected to the IMS via the portable wireless hotspot, e.g., via Wi-Fi. In this example, the provisioning may differ from that shown in Fig. 4b, in that the portable wireless hotspot may directly communicate with the provisioning system, instead of communicating via the auto-configurations server. Also here, the provisioning may be deemed to be authorized if the notification is received via one or more trusted elements of the network, and in particular, if the notification is received via a chain of trusted elements connecting the portable wireless hotspot to the provisioning system. Such a chain of trusted elements may be provided by the UMTS/LTE access network.

Several other examples of the provisioning are equally conceivable. For example, the authenticated user device may be an Analogue Terminal Adapter (ATA) which may be provisioned in and authenticated to the IMS, e.g., using the aforementioned method of service preparation as described in European Patent EP 1912411.

In general, the notification may also be received via a non-trusted element of the network. In this case, the provisioning system PS may, as part of a message exchange titled "ID AUD", identify a further authenticated user device (AUD) in the user profile of the HSS. The provisioning system PS may specifically identify a further authenticated user device being of the device type which allows querying the user. For example, the provisioning system PS may identify a mobile phone which is provisioned in and authenticated to the IMS. Having identified the further authenticated user device, the provisioning system PS may then obtain authorization for provisioning the user device UD in the IMS by querying the user via the further authenticated user device AUD to authorize said provisioning of the user device. Such a query may be effected by the provisioning system PS sending a message titled "QRY" to the further authenticated user device AUD. In response, the further authenticated user device AUD may present the query to the user, e.g., in the form of a notification such as a pop-up window. Having obtained the authorization from the user, the further authenticated user device AUD may provide a response to the provisioning system PS by sending a message titled "RSP". Finally, upon receipt of the authorization from the further authenticated user device AUD, the provisioning system PS may provision the user device UD in the IMS by creating an entry for the user device UD in the user profile, i.e., using the message "ADD UD".

In the above, the response to the query is described as being returned via the further authenticated user device AUD. It is noted that, alternatively, the user may use a different device to return the response to the provisioning system PS. For that purpose, the provisioning system PS may provide an authorization token to the further authenticated user device AUD. The user may then authorize the provisioning of the user device UD by returning a response to the provisioning system PS based on the authorization token. Such a response may then be returned using any suitable device. For example, the user may provide the response to the query using the user device UD itself or a device of a different user.

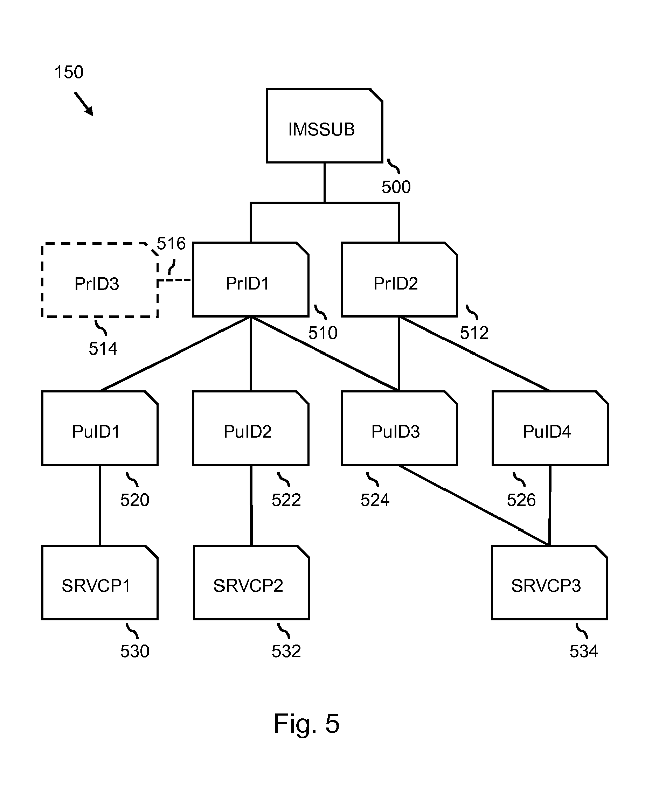

In general, the processing subsystem may be arranged for establishing a logical connection in the user profile 150 between the entry of the user device and an entry of a selected authenticated user device included in the user profile. Fig. 5 shows an example of such a user profile 150 in the form of an IMS user profile as stored in the HSS.

In Fig. 5, the blocks denote information entries in the user profile, and lines between the depicted blocks denote logical connections between the information entries, thereby providing a hierarchical structuring of the entries. Such logical connections are also referred to as bindings, in that an entry is bound to another entry using the logical connection.

Fig. 5 shows a root block 500 which is an IMS subscription entry for a particular user in the user profile. Fig. 5 further shows two private user identities 510, 512 which each may be assigned to a Session Initiation Protocol (SIP) User Agent (UA), with the SIP UA being typically provided by a device of the user. For example, the first private user identity 510 may be associated with a home gateway of the user, and the second private user identity 512 may be associated with a Smartphone of the user. The user profile is shown to further comprise a number of public user identities 520-526. Here, a first, second and third public user identity 520-524 are shown to be connected to the first private user identity 510, and the third and a fourth public user identity 524, 526 are shown to be connected to the second private user identity 512. The public user identities allow the corresponding devices to be addressed from within the IMS, and may comprise, e.g., a phone number, an e-mail address, a network address such as an IP address, a Uniform Resource Locator (URL), etc.

In the example of Fig. 5, the public user identities 520-526 are further shown to be connected to service profiles 530-534, namely, by way of example, the first public user identity 520 being connected to a first service profile 530, the second public user identity 522 being connected to a second service profile 532, and the third and fourth public user identities 524, 526 being each connected to a third service profile 534.

Fig. 5 shows a result of the provisioning system creating an entry for the user device in the user profile 150. Here, the entry is created in the form of a third private user identity 514 which identifies the user device. The provisioning system may further establish a logical connection 516 between the third private user identity 514 of the user device and an entry of an authenticated user device. In particular, the provisioning system may establish the logical connection with a private user identity of the authenticated device. In the example of Fig. 5, the third private user identity 514 of the user device is shown to be connected to the first private user identity 510. As such, the user device may be addressable from within the IMS based on the public user identity of the authenticated user device. It is noted that, alternatively, the third private user identity 514 may be established in another database in the IMS, and an entry for the user device may be added in the HSS in the form of a cross-reference from the HSS to the third private user identity 514 in the other database.

Fig. 5 shows the user device being bound to the private user identity of the authenticated user device as identified by the notification, i.e., the home gateway. Although not shown in Fig. 5, the provisioning system may be arranged for enabling the user to select one of the authenticated user devices to which the entry of the user device is bound, e.g., by receiving selection data from the user. For example, a web page may be provided which enables the user to select amongst a plurality of authenticated user devices. The selection may also be presented to the user as part of the query. For example, when querying the user to obtain authorization for provisioning the user device, the user may also be queried on to which one of the plurality of authenticated user devices the user device is to be bound. The selection may also be automatic. For example, the provisioning system may bind the entry of the user device to an entry of an authenticated user device which is most similar in device type. As such, an entry of a mobile user device may be bound to an entry of a mobile authenticated user device such as a Smartphone, and an entry of a home user device may be bound to an entry of a home authenticated user device such as a home gateway. As such, the mobile user device may be addressable under the public user identity of the Smartphone.

Additionally or alternatively, the provisioning system may bind the entry of the user device to an entry of an authenticated user device which is most similar in device location. For example, if one of the authenticated user devices is located in a same local network as the user device, the entry of the user device may be bound to the entry of said authenticated user device. As a result, if the user device is located in a home network of the user, the entry of the user device may be bound to an entry of a home gateway of the user due to the home gateway also being located in said home network.

It will be appreciated that the present invention may be advantageously used to automatically provision user devices such as smart home appliances in the IMS. As a result, the smart home appliance may be bound to a public identity of the home gateway of the user. The public identity may provide, e.g., an e-mail address, a network address, etc, of the user. In case the smart home appliance experiences a malfunction, it may automatically connect to a service organization of the manufacturer. The service organization may then be able to obtain the e-mail address, network address, etc, of the user from the IMS, thereby enabling the service organization to conveniently schedule a repair. The network operator may also securely provide, or make available, other information associated with the user to the service organization of the manufacturer, e.g., subscriber information such as a name of the user, a home address, etc. Advantageously, the cost of the repair costs may be automatically billed to the user via the billing services of the network operator.

It will be appreciated that by provisioning a user device in the IMS, the user device is enabled to utilize many of the services provided by the IMS, such as network addressability, online payment facilities, billing services, etc.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. Provisioning system (120) for provisioning a user device (020) in a network subsystem (100) of a network, the provisioning system comprising:
- a network interface (122) for receiving a notification via the network, the notification comprising an identification of the user device (020) and an identification of an authenticated user device (040), the authenticated user device being authenticated to the network subsystem; and
- a processing subsystem (124) for:
i) based on the identification of the authenticated user device, locating a user profile (150), which includes an entry (510) for the authenticated user device, on a user profile server (140) of the network subsystem; and
ii) provisioning the user device (020) in the network subsystem by creating an entry (514) for the user device in the user profile (150).

2. Provisioning system (120) according to claim 1, wherein the authenticated user device (040) is a home gateway of a home network (060) of the user, and wherein the user device (020) is located in the home network (060).

3. Provisioning system (120) according to claim 2, wherein the notification constitutes a notification of a discovery of the user device (020) by the home gateway (040), and wherein the processing subsystem (124) is arranged for initiating the provisioning of the user device in response to said discovery by the home gateway.

4. Provisioning system (120) according to claim 2 or 3, wherein the home gateway (040) is connected to an auto-configuration server (082), and wherein the network interface (122) is arranged for receiving the notification via the auto-configuration server.

5. Provisioning system (120) according to any one of the above claims, wherein the provisioning is subject to the notification being received via one or more trusted elements (082, 084) of the network.

6. Provisioning system (120) according to any one of the above claims, wherein the processing subsystem (124) is arranged for i) identifying a further authenticated user device (040) in the user profile (150), and ii) querying the user via the further authenticated user device to authorize said provisioning of the user device (020).

7. Provisioning system (120) according to claim 6, wherein querying the user comprises sending an authorization token to the further authenticated user device (040) for enabling the user to authorize said provisioning of the user device (020) by providing a response to the provisioning system based on the authorization token.

8. Provisioning system (120) according to any one of the above claims, wherein the processing subsystem (124) is arranged for establishing a logical connection (516) in the user profile (150) between the entry (514) of the user device (020) and an entry (510) of a selected authenticated user device included in the user profile.

9. Provisioning system (120) according to claim 8, wherein the logical connection (516) is established to a private user identity (510) of the selected authenticated user device.

10. Provisioning system (120) according to claim 8 or 9, wherein the selected authenticated user device is the authenticated user device (040).

11. Provisioning system (120) according to claim 8 or 9, wherein the user profile (150) includes a plurality of entries (510, 512) for a respective plurality of authenticated user devices, and wherein the processing subsystem (124) is arranged for selecting the selected authenticated user device amongst the plurality of authenticated user devices based on a correspondence with the user device (020) in device type and/or device location.

12. Provisioning system (120) according to claim 8 or 9, wherein the user profile (150) includes a plurality of entries (510, 512) for a respective plurality of authenticated user devices, and wherein the provisioning system is arranged for receiving a selection from the user identifying one of the plurality of authenticated user devices, thereby establishing the selected authenticated user device.

13. Network subsystem (100) comprising the provisioning system (120) according to any one of the above claims.

14. Method (200) of using network equipment for provisioning a user device in a network subsystem of a network, the method comprising:
- receiving (210) a notification via the network, the notification comprising an identification of the user device and an identification of an authenticated user device, the authenticated user device being authenticated to the network subsystem;
- based on the identification of the authenticated user device, locating (220) a user profile, which includes an entry for the authenticated user device, on a user profile server of the network subsystem; and
- provisioning (230) the user device in the network subsystem by creating an entry for the user device in the user profile.

15. Control software (310) for provisioning a user device in a network subsystem of a network, the control software comprising instructions for execution on network equipment, the instructions being operative for:
- receiving (210) a notification via the network, the notification comprising an identification of the user device and an identification of an authenticated user device, the authenticated user device being authenticated to the network subsystem;
- based on the identification of the authenticated user device, locating (220) a user profile, which includes an entry for the authenticated user device, on a user profile server of the network subsystem; and
- provisioning (230) the user device in the network subsystem by creating an entry for the user device in the user profile.
